# EUROPÄISCHE PATENTSCHRIFT

(11) **EP 2 576 174 B1**
(45) Veröffentlichungstag und Bekanntmachung des Hinweises auf die Patenterteilung: **17.05.2017**
(21) Anmeldenummer: 11703383.7
(22) Anmeldetag: 25.01.2011
(51) Int. Cl.: B29C 44/14, B29C 44/58, B60N 2/70

(54) **VERFAHREN ZUR HERSTELLUNG EINER KOPFSTÜTZE SOWIE KOPFSTÜTZE**
METHOD FOR PRODUCING A HEAD RESTRAINT AND HEAD RESTRAINT
PROCÉDÉ DE FABRICATION D'UN APPUI-TÊTE ET APPUI-TÊTE

(30) Priorität: 31.05.2010 DE 102010022046
(43) Veröffentlichungstag der Anmeldung: 10.04.2013
(73) Patentinhaber: Johnson Controls GmbH, 51399 Burscheid (DE)
(72) Erfinder: MANDUZIO, Felix, F-67200 Strasbourg (FR); LANG, Nathalie, F-67130 Wisches (FR); NAVARRO, Daniel, F-67500 Haguenau (FR)
(74) Vertreter: Schwöbel, Thilo K.
(86) Internationale Anmeldenummer: PCT/EP2011/000296
(87) Internationale Veröffentlichungsnummer: WO 2011/150989

(56) Entgegenhaltungen:
- DE-A1- 10 238 597
- FR-A- 1 320 410
- US-A1- 2004 000 738

## Beschreibung

Die vorliegende Erfindung betrifft ein Verfahren zur Herstellung einer Kopfstütze, insbesondere einer Kraftfahrzeugkopfstütze, wobei die Kopfstütze einen Bezug und ein Schaummaterial aufweist, wobei das Schaummaterial zumindest bereichsweise den Bezug ausfüllt. Ferner betrifft die vorliegende Erfindung eine Kopfstütze, insbesondere eine Kraftfahrzeugkopfstütze, wobei die Kopfstütze einen Bezug und ein Schaummaterial aufweist, wobei das Schaummaterial zumindest bereichsweise den Bezug ausfüllt.

### Stand der Technik

Bekannt sind Verfahren zur Herstellung von Kopfstützen, wobei die Einbringung des Schaummaterials in den Bezug der Kopfstütze zumindest teilweise in flüssigem Zustand des Schaummaterials erfolgt, sogenannte "Pour-in-Place"-Technik, d.h. das Schaummaterial ist als am Ort gegossenes Schaummaterial vorgesehen bzw. der Bezug ist eingeschäumt vorgesehen. US 2004/000738 A1, das als nächstliegender Stand der Technik betrachtet wird, lehrt eine Vorrichtung und ein Verfahren zur Herstellung einer durchsichtigen Kopfstütze. DE 102 38 597 A1 offenbart ein Verfahren zur Herstellung von Formteilen aus thermoplastischen Kunststoffen. FR 1320 410 A lehrt ein Herstellungsverfahren zur Dispersion von Kunststoffen in Hohlkörpern und Formteilen, welche letztlich zu Schaumstoff verarbeitet werden.

Eine Aufgabe der vorliegenden Erfindung ist die Bereitstellung eines Verfahrens zur Herstellung einer Kopfstütze, insbesondere einer Kraftfahrzeugkopfstütze, wobei ein besonders geringer Aufwand (und damit auch geringer Zeitbedarf vorliegt), bevor ein erster Prototyp der Kopfstütze derart hergestellt werden kann, dass der Prototyp der Kopfstütze entweder exakt identisch ist zu einer Kopfstütze, die unter Verwendung des gleichen Entwurfs mit Werkzeugen zur Serienfertigung von Kopfstützen hergestellt worden wäre.

Die Aufgabe wird gelöst durch ein Verfahren zur Herstellung einer Kopfstütze, insbesondere einer Kraftfahrzeugkopfstütze, wobei die Kopfstütze einen Bezug und ein Schaummaterial aufweist, wobei das Schaummaterial zumindest bereichsweise den Bezug ausfüllt, wobei das Verfahren die folgenden Schritte aufweist:
-- Herstellen einer Prototyp-Form, wobei die Prototyp-Form wenigstens zwei Teile umfasst, wobei die Prototyp-Form in zusammengesetzten Zustand ihrer Teile eine ins Innere der Prototyp-Form weisende innere Oberfläche aufweist und eine äußere Oberfläche aufweist, wobei die Prototyp-Form mittels eines Stereo-Lithographie-Verfahrens hergestellt wird, wobei bei der Herstellung der Prototyp-Form im Bereich ihrer äußeren Oberfläche Verstärkungsrippen ausgebildet werden,
-- Herstellen des Bezugs,
-- Zusammensetzen der Teile der Prototyp-Form derart, dass der Bezug im Inneren der Prototyp-Form angeordnet ist,
-- Einbringen des Schaummaterials ins Innere des Bezugs, wobei das Schaummaterial zum Zeitpunkt des Einbringens zumindest teilweise flüssig ist.

Hierdurch ist es erfindungsgemäß in besonders vorteilhafter Weise möglich, dass zur Herstellung der Prototyp-Form ein Rapid-Prototyping-Verfahren (Verfahren zur schnellen Herstellung eines Prototypen) zur Formgebung verwendet werden kann.

Durch die Verwendung eines Stereo-Lithographie-Verfahrens ist es unter Vermeidung eines sehr großen Kostenaufwandes möglich, dass die Prototyp-Form besonders schnell und trotzdem kostengünstig hergestellt werden kann.

Durch die direkte Realisierung von Verstärkungsrippen auf der äußeren Oberfläche der Prototyp-Form ist es vorteilhaft möglich, dass sich Formveränderungen der Prototyp-Form und damit auch der in der Prototyp-Form hergestellten Kopfstütze während des Einbringens des Schaummaterials ganz oder zumindest weitgehend vermeiden lassen, so dass durch die Definition der inneren Oberfläche und der äußeren Oberfläche der Prototyp-Form auch die fertige Gestalt der in der Prototyp-Form hergestellten Kopfstütze in besonders genauer Weise bestimmen lässt.

Erfindungsgemäß ist es ferner besonders bevorzugt, wenn bei der Herstellung der Prototyp-Form Verbindungselemente zur Verbindung der einzelnen Teile der Prototyp-Form aus dem Material der Prototyp-Form hergestellt werden.

Hierdurch ist es in besonders vorteilhafter Weise möglich, dass sich die Prototyp-Form besonders einfach zusammenbauen lässt.

Ferner ist es erfindungsgemäß auch bevorzugt vorgesehen, dass bei der Herstellung der Prototyp-Form Ausnehmungen in der Prototypform hergestellt werden, wobei die Ausnehmungen zur Befestigung von Verbindungselementen dienen, die zur Verbindung der einzelnen Teile der Prototyp-Form vorgesehen sind.

Hierdurch ist es erfindungsgemäß nach dieser Ausführungsform besonders vorteilhaft möglich, dass der Zusammenbau der Prototyp-Form beispielsweise mit den gleichen Verbindungselementen bewerkstelligt werden kann.

Ausführungsbeispiele der Erfindung sind in der Zeichnung dargestellt und in der nachfolgenden Figurenbeschreibung näher erläutert.

### Kurze Beschreibung der Figuren

- Figur 1: zeigt die Einzelteile bzw. die Teile einer Prototyp-Form zur Verwendung in einem Verfahren gemäß der vorliegenden Erfindung zur Herstellung einer Kopfstütze.
- Figur 2: zeigt mehrere Strukturelemente der Kopfstütze gemäß einer ersten Ausführungsform, die zumindest teilweise im Inneren des Bezugs der Kopfstütze bei der fertig zusammengebauten erfindungsgemäßen Kopfstütze angeordnet sind.
- Figur 3: zeigt eine Prototyp-Form zur Herstellung einer erfindungsgemäßen Kopfstütze in zusammengebautem Zustand, wobei sich die Strukturelemente der Kopfstütze zumindest teilweise im Inneren des Bezugs der Kopfstütze befinden.
- Figur 4: zeigt die Fahrzeugkopfstütze gemäß der ersten Ausführungsform in einer Benutzungsstellung, d.h. angebracht im Bereich des oberen Endes der Lehne eines Fahrzeugsitzes
- Figur 5: zeigt mehrere Strukturelemente der Kopfstütze gemäß einer zweiten Ausführungsform der erfindungsgemäßen Kopfstütze.
- Figur 6: zeigt eine Prototyp-Form zur Herstellung einer erfindungsgemäßen Kopfstütze gemäß der zweiten Ausführungsform in zusammengebautem Zustand, wobei sich die Strukturelemente der Kopfstütze zumindest teilweise im Inneren des Bezugs der Kopfstütze befinden.
- Figur 7: zeigt die Fahrzeugkopfstütze gemäß der zweiten Ausführungsform der vorliegenden Erfindung in einer Benutzungsstellung, d.h. angebracht im Bereich des oberen Endes der Lehne eines Fahrzeugsitzes.
- Figuren 8, 9 und 10: zeigen eine dritte Ausführungsform der erfindungsgemäßen Kopfstütze, wobei Figur 8 Strukturelemente, Figur 9 die Prototyp-Form und Figur 10 die fertig zusammengebaute Kopfstütze zeigt.

### Figurenbeschreibung

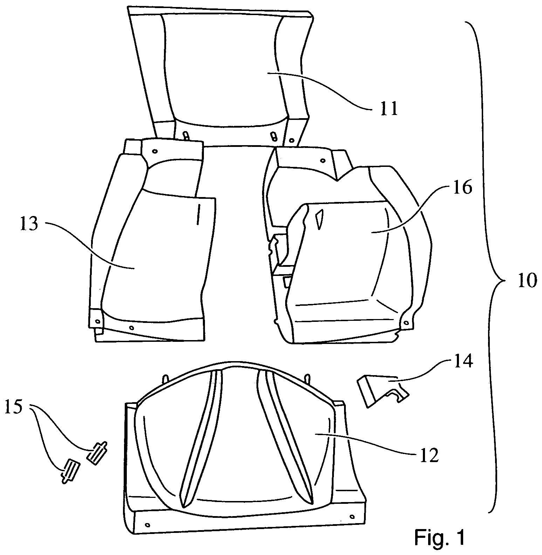

In Figur 1 ist schematisch eine Prototyp-Form 10 gemäß einer ersten Ausführungsform abgebildet, die zur Verwendung im erfindungsgemäßen Herstellungsverfahren vorgesehen ist. Die Prototyp-Form 10 umfasst gemäß der ersten Ausführungsform eine Mehrzahl von verschiedenen Teilen bzw. Einzelteilen 11, 12, 13, 14, 15. Hierbei ist es gemäß der ersten Ausführungsform beispielsweise vorgesehen, dass die Prototyp-Form ein erstes Teil 11, ein zweites Teil 12, ein drittes Teil 13, ein viertes Teil 14, ein mehrere fünfte Teile 15 und ein sechstes Teil 16 umfasst.

Das vierte Teil 14 und die fünften Teile 15 (welche aus dem Material der Prototyp-Form hergestellt sind), sind beispielsweise dazu vorgesehen, als Verbindungselemente 14, 15 zu dienen, d.h. in zusammengebautem Zustand wird durch die Anbringung der Verbindungselemente 14, 15 die Prototyp-Form zumindest teilweise zusammengehalten.

Alternativ dazu kann es jedoch auch vorgesehen sein, dass das vierte Teil 14 und die fünften Teile 15 nicht als Verbindungselemente dienen, sondern dass weitere Verbindungselemente (nicht dargestellt), die nicht aus dem Material der Prototyp-Form hergestellt sind, zum Zusammenhalt der Prototyp-Form dienen.

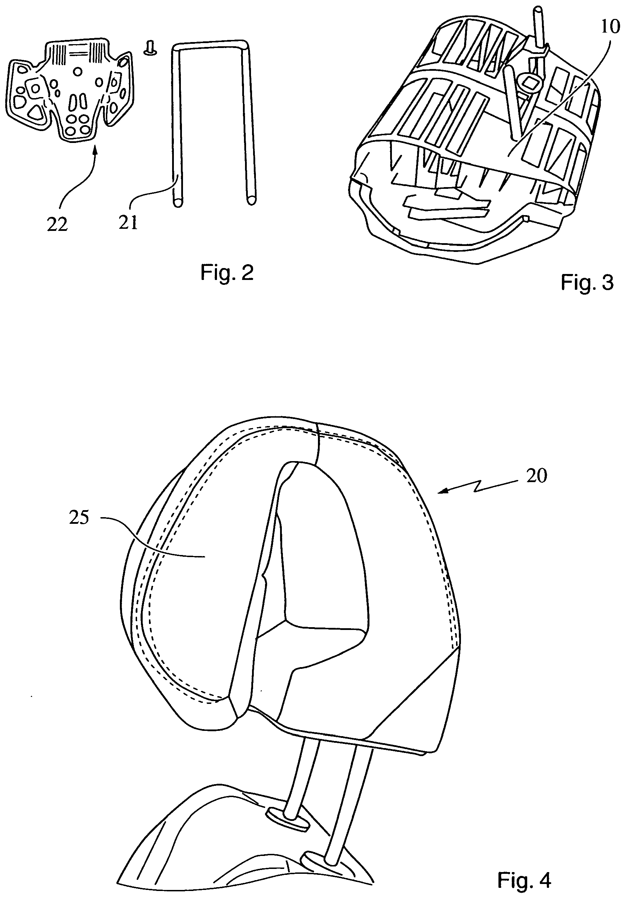

In Figur 2 sind mehrere Strukturelemente 21, 22 der erfindungsgemäßen Kopfstütze 20 (vgl. Figur 4) gemäß der ersten Ausführungsform dargestellt. Ein erstes Strukturelement 21 ist beispielsweise als Kopfstützenstange ausgebildet. Ein zweites Strukturelement 22 ist beispielsweise als Halteplatte der Kopfstütze 20 gemäß der ersten Ausführungsform ausgebildet. Die Strukturelemente 21, 22 sind zumindest teilweise im Inneren des Bezugs 25 (s. Figur 4) der Kopfstütze 20 bei der fertig zusammengebauten erfindungsgemäßen Kopfstütze 20 angeordnet sind.

In Figur 3 ist eine Prototyp-Form 10 zur Herstellung einer erfindungsgemäßen Kopfstütze 20 gemäß der ersten Ausführungsform in zusammengebautem Zustand dargestellt, wobei sich die Strukturelemente 21, 22 der Kopfstütze 20 bereits im Inneren des Bezugs 25 der Kopfstütze 20 befinden.

In Figur 4 ist die Fahrzeugkopfstütze 20 gemäß der ersten Ausführungsform in einer Benutzungsstellung, d.h. angebracht im Bereich des oberen Endes der Lehne eines Fahrzeugsitzes, dargestellt. Figur 4 zeigt auch schematisch den Bezug der Kopfstütze.

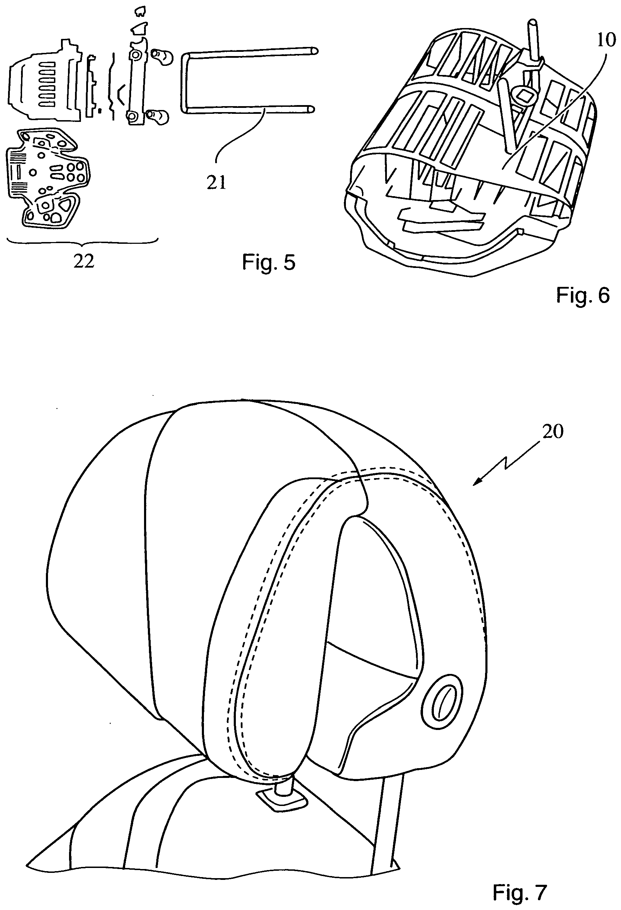

Die Figuren 5, 6 und 7 zeigen eine zweite Ausführungsform der erfindungsgemäßen Kopfstütze 20, wobei Figur 5 wiederum mehrere Strukturelemente 21, 22 der Kopfstütze 20 gemäß einer zweiten Ausführungsform zeigt, wobei Figur 6 die Prototyp-Form 10 zur Herstellung der erfindungsgemäßen Kopfstütze 20 gemäß der ersten Ausführungsform in zusammengebautem Zustand dargestellt, und wobei Figur 7 die fertige Kopfstütze 20 darstellt.

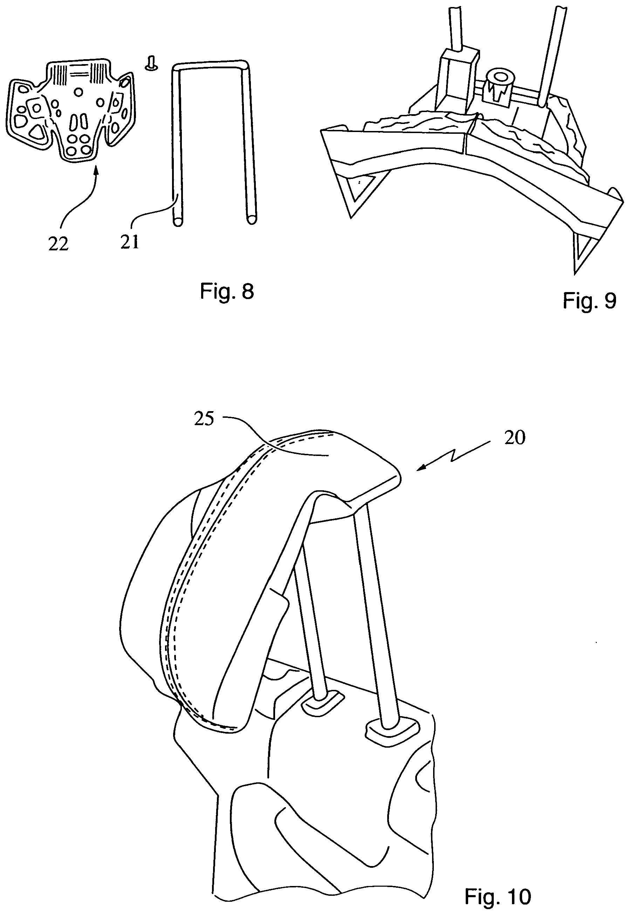

Figuren 8, 9 und 10 zeigen eine dritte Ausführungsform der erfindungsgemäßen Kopfstütze, wobei Figur 8 Strukturelemente 21, 22, Figur 9 die Prototyp-Form 10 zur Herstellung der Kopfstütze 20 und Figur 10 die fertig zusammengebaute Kopfstütze 20 zeigt.

Zur Herstellung einer erfindungsgemäßen Kopfstütze, d.h. insbesondere eines Prototypen einer Kopfstütze, die serienmäßig später mit einem Serienwerkzeug hergestellt werden soll, wird zu einem Kopfstützenentwurf ein Bezug hergestellt und mittels eines Rapid-Prototyping-Verfahrens die Teile 11, 12, 13, 14, 15, 16 der Prototyp-Form 10 hergestellt.

Die Prototyp-Form 10 definiert in ihrem Inneren eine innere Oberfläche, in die hinein der Bezug 25 eingelegt wird. Anschließend wird die Prototyp-Form zusammengefügt.

In einem nächsten Schritt wird ein in den Zeichnungen nicht dargestelltes Schaummaterial als Füllmaterial des Kopfstützenbezugs 25 in zumindest teilweise flüssigem Zustand in das Innere des Bezugs 25 und damit auch in das Innere der Prototyp-Form 10 eingebracht. Das zumindest teilweise flüssige Schaummaterial verfestigt sich und dehnt sich aus. Dieses Verfahren wird als sog. "Pour-in-Place-Technik" bezeichnet und hat den Vorteil, dass die Verbindung zwischen dem Schaummaterial und dem Bezug leichter hergestellt werden kann, weil nicht ein Bezug über ein bereits fertig hergestellter Schaumkörper gezogen werden muss.

### Bezugszeichenliste

- 10: Prototyp-Form
- 11: erstes Teil
- 12: zweites Teil
- 13: drittes Teil
- 14: viertes Teil
- 15: fünftes Teil
- 16: sechstes Teil
- 20: Kopfstütze
- 21: erstes Strukturelement
- 22: zweites Strukturelement
- 25: Bezug

## Patentansprüche

1. Verfahren zur Herstellung einer Kopfstütze, insbesondere einer Kraftfahrzeugkopfstütze, wobei die Kopfstütze einen Bezug und ein Schaummaterial aufweist, wobei das Schaummaterial zumindest bereichsweise den Bezug ausfüllt, wobei das Verfahren die folgenden Schritte aufweist:
-- Herstellen einer Prototyp-Form, wobei die Prototyp-Form wenigstens zwei Teile umfasst, wobei die Prototyp-Form in zusammengesetzten Zustand ihrer Teile eine ins Innere der Prototyp-Form weisende innere Oberfläche aufweist und eine äußere Oberfläche aufweist, wobei die Prototyp-Form mittels eines Stereo-Lithographie-Verfahrens hergestellt wird, wobei bei der Herstellung der Prototyp-Form im Bereich ihrer äußeren Oberfläche Verstärkungsrippen ausgebildet werden,
-- Herstellen des Bezugs,
-- Zusammensetzen der Teile der Prototyp-Form derart, dass der Bezug im Inneren der Prototyp-Form angeordnet ist,
-- Einbringen des Schaummaterials ins Innere des Bezugs, wobei das Schaummaterial zum Zeitpunkt des Einbringens zumindest teilweise flüssig ist.

2. Verfahren nach Anspruch 1, **dadurch gekennzeichnet, dass** bei der Herstellung der Prototyp-Form Verbindungselemente zur Verbindung der einzelnen Teile der Prototyp-Form aus dem Material der Prototyp-Form hergestellt werden.

3. Verfahren nach einem der vorhergehenden Ansprüchen, **dadurch gekennzeichnet, dass** bei der Herstellung der Prototyp-Form Ausnehmungen in der Prototypform hergestellt werden, wobei die Ausnehmungen zur Befestigung von Verbindungselementen dienen, die zur Verbindung der einzelnen Teile der Prototyp-Form vorgesehen sind.

## Claims

1. Method for producing a head restraint, in particular a motor vehicle head restraint, wherein the head restraint has a lining and a foam material, wherein the foam material fills out the lining at least in regions, wherein the method has the following steps:
- producing a prototype mold, wherein the prototype mold comprises at least two parts, wherein the prototype mold, in the assembled state of its parts, has an inner surface pointing into the interior of the prototype mold and has an outer surface, wherein the prototype mold is produced by means of a stereolithography process, wherein, during the production of the prototype mold, reinforcement ribs are formed in the region of the outer surface thereof,
- producing the lining,
- assembling the parts of the prototype mold in such a way that the lining is arranged in the interior of the prototype mold,
- introducing the foam material into the interior of the lining, wherein the foam material is at least partially liquid at the time at which it is introduced.

2. Method according to Claim 1, **characterized in that**, during the production of the prototype mold, connecting elements for connecting the individual parts of the prototype mold are produced from the material of the prototype mold.

3. Method according to either of the preceding claims, **characterized in that**, during the production of the prototype mold, recesses are produced in the prototype mold, wherein the recesses serve for the fastening of connecting elements which are provided for connecting the individual parts of the prototype mold.

## Revendications

1. Procédé pour la fabrication d'un appuie-tête, en particulier d'un appuie-tête de véhicule automobile, l'appuie-tête présentant un revêtement et un matériau en mousse, le matériau en mousse remplissant au moins en partie le revêtement, le procédé comprenant les étapes suivantes :
- fabrication d'un moule prototype, le moule prototype comprenant au moins deux parties, le moule prototype, dans l'état assemblé de ses parties, présentant une surface intérieure tournée vers l'intérieur du moule prototype et une surface extérieure, le moule prototype étant fabriqué au moyen d'un procédé de stéréo-lithographie, des nervures de renforcement étant réalisées lors de la fabrication du moule prototype dans la région de sa surface extérieure,
- fabrication du revêtement,
- assemblage des parties du moule prototype de telle sorte que le revêtement soit disposé à l'intérieur du moule prototype,
- introduction du matériau en mousse à l'intérieur du revêtement, le matériau en mousse étant au moins en partie fluide à l'instant de l'introduction.

2. Procédé selon la revendication 1, **caractérisé en ce que** lors de la fabrication du moule prototype, des éléments de connexion pour la connexion des parties individuelles du moule prototype sont fabriqués à partir du matériau du moule prototype.

3. Procédé selon l'une quelconque des revendications précédentes, **caractérisé en ce que** lors de la fabrication du moule prototype, des évidements sont réalisés dans le moule prototype, les évidements servant à la fixation d'éléments de connexion qui sont prévus pour la connexion des parties individuelles du moule prototype.
